# FASCICULE DE BREVET EUROPEEN

(11) **EP 0 725 467 B1**
(45) Date de publication et mention de la délivrance du brevet: **02.09.1998**
(21) Numéro de dépôt: 96420029.9
(22) Date de dépôt: 29.01.1996
(51) Int. Cl.: H02G 3/26, F16B 5/06

(54) **Dispositif de fixation pour l'assemblage des chemins de câbles en tôle d'acier**
Befestigungsvorrichtung zur Verbindung von Stahlblechkabelrinnen
Fixation device for assembling metal sheet-cable ducts

(30) Priorité: 01.02.1995 FR 9501346
(43) Date de publication de la demande: 07.08.1996
(73) Titulaire: MAVIL, F-21430 Liernais (FR)
(72) Inventeur: Simon, Bernard, F-69300 Caluire (FR)
(74) Mandataire: Monnier, Guy

(56) Documents cités:
- FR-A- 2 540 946
- US-A- 4 745 666

## Description

La présente invention a trait à un dispositif de fixation pour l'assemblage des chemins de câbles sur leurs supports. Le dispositif de fixation est plus particulièrement destiné à l'assemblage des chemins de câbles en tôle perforée.

Par le document FR-A3-2 540 946, on connaît un dispositif porteur comprenant un chemin de câbles immobilisé sur une console au moyen de crampons comportant deux branches élastiques. Une fois en place, ces crampons ne peuvent être que difficilement retirés en insérant un outil dans un trou oblong, ce qui n'est pas toujours possible en fonction de l'accès éventuellement limité à ces crampons.

On connaît également des attaches élastiques réalisées dans un fil métallique comprenant généralement un profil en forme de V dont la pointe est pliée dans un plan horizontal, tandis que chacune des branches du V reste dans un plan vertical et comporte un crochet à son extrémité libre. Les attaches viennent s'accrocher par l'extérieur sur le bord supérieur des parois verticales du chemin de câbles, tandis que la pointe du V se trouvant dans un plan horizontal est encliquetée à l'intérieur du support sur lequel repose ledit chemin de câbles.

On constate que les extrémités libres de l'attache élastique sont disposées à l'intérieur du chemin de câbles, risquant d'une part de blesser les câbles électriques et d'autre part d'être décrochées par un câble lors de sa mise en place. De plus, on remarque que le maintien latéral du chemin de câbles par rapport au support est très aléatoire puisque les extrémités libres en forme de crochet de chaque attache élastique ne sont pas retenues latéralement sur ledit chemin de câbles. En outre, les extrémités libres viennent s'accrocher sur le bord supérieur des parois verticales du chemin de câbles, empêchant ce dernier d'être fermé par exemple par un couvercle.

C'est à ces inconvénients qu'entend plus particulièrement remédier la présente invention.

Le dispositif de fixation suivant la présente invention est constitué d'une clé de verrouillage qui comprend un corps allongé déformable élastiquement pourvu à chaque extrémité de moyens de fixation coopérant chacun avec l'un des trous oblongs correspondants ménagés dans le fond du chemin de câbles, lesdits moyens permettant respectivement la retenue du chemin de câbles sur un support métallique et le verrouillage de la clé sur le fond du chemin de câbles. En outre, la clé de verrouillage comporte entre les moyens de fixation une butée de retenue qui coopère avec uin trou oblong intermédiaire du chemin de câbles pour le maintien latéral du corps allongé.

On note que la distance prévue entre les moyens de fixation et la butée de retenue correspond sensiblement à celle séparant les trous oblongs ménagés dans le fond du chemin de câbles.

Les dessins annexés, donnés à titre d'exemple, permettront de mieux comprendre l'invention, les caractéristiques qu'elle présente et les avantages qu'elle est susceptible de procurer :

Fig. 1 est une vue en perspective éclatée montrant le dispositif de fixation pour l'assemblage du chemin de câbles correspondant sur son support suivant la présente invention.

Fig. 2 est une vue de dessus illustrant la mise en place de la clé de verrouillage sur le fond du chemin de câbles.

Fig. 3 est une coupe suivant III-III (fig. 2) représentant la retenue du chemin de câbles sur son support par l'intermédiaire de la clé de verrouillage.

Fig. 4 est une coupe suivant IV-IV (fig. 3) montrant le premier moyen de fixation de la clé de verrouillage permettant la retenue du chemin de câbles sur son support métallique.

Fig. 5 est une coupe suivant V-V (fig. 3) illustrant la butée de retenue à l'intérieur d'un trou oblong du chemin de câbles pour le maintien latéral de la clé de verrouillage.

Fig. 6 est une coupe suivant VI-VI (fig. 3) représentant le second moyen de fixation de la clé de verrouillage permettant sa retenue sur le fond du chemin de câbles.

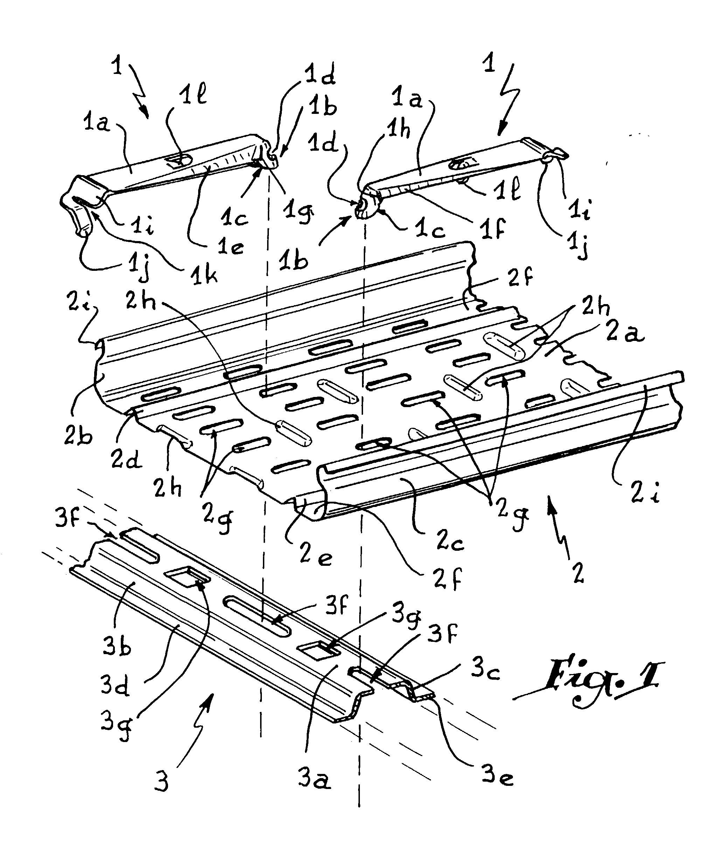

On a représenté en fig. 1 le dispositif de fixation qui est constitué d'une clé de verrouillage 1 réalisée dans un corps métallique allongé 1a pour la fixation d'un chemin de câbles 2 en tôle perforée sur un support 3.

Le corps allongé 1a de la clé 1 comporte à l'une de ses extrémités un premier moyen de fixation en forme de bec 1b disposé dans un plan sensiblement perpendiculaire à celui contenant ledit corps. Le bec 1b présente un profil extérieur 1c formant une came tandis que ledit bec est percé en son milieu d'un trou 1d en forme de C.

Le corps 1a comporte sur la plus grande partie de sa longueur des pans inclinés 1e et 1f dont la surface augmente progressivement pour constituer au voisinage et de part et d'autre du bec 1b des butées 1g et 1h dont on verra mieux plus loin la fonction.

Le corps 1a comporte à l'opposé du bec 1b un second moyen de fixation constitué d'une face inclinée 1i qui est partiellement découpée pour former une patte 1j. Cette dernière est pliée dans une direction perpendiculaire celle de la face 1i pour constituer une fente 1k débouchante dont l'ouverture est croissante en fonction de l'inclinaison de la patte 1j.

Le corps 1a comprend sensiblement en son milieu et plus particulièrement entre le bec 1b et la face inclinée 1i une découpe constituant une languette inclinée 1l ou butée de retenue dirigée dans la même direction que celle dudit bec par rapport au corps 1a.

Le tronçon de chemin de câbles 2 comporte un fond 2a délimité par deux ailes verticales 2b et 2c. Le fond 2a comporte deux nervures parallèles et longitudinales 2d et 2e. Les nervures 2d et 2e sont également parallèles aux ailes 2b et 2c de manière à délimiter un espace 2f qui se trouve dans le même plan que le fond 2a. Le fond 2a et l'espace 2f sont percés d'un certain nombre de trous oblongs 2g régulièrement espacés et alignés les uns par rapport aux autres. Le fond 2a comporte entre chaque série de trous oblongs 2g des nervures de renforcement 2h disposées perpendiculairement aux trous 2g et aux nervures 2d et 2e. Le bord supérieur 2i de chaque aile verticale 2b et 2c peut être recourbé en direction de l'extérieur du chemin de câbles 2 pour permettre par exemple la fixation d'un couvercle non représenté.

Le support 3 sur lequel doit être fixé le chemin de câbles 2 est réalisé dans un profilé métallique présentant la forme d'un Ω ou d'un C ou d'un U. Le support 3 comporte un fond 3a qui est bordé latéralement par deux parois latérales inclinées 3b et 3c dont les extrémités libres sont pliées pour constituer deux ailes 3d et 3e parallèles au fond 3a. Le fond 3a du support 3 est percé de trous oblongs 3f entre lesquels sont intercalés des trous 3g à section carrée.

Le support 3 peut être de forme différente à condition qu'il présente un fond semblable à celui 3a décrit précédemment pour la mise en oeuvre de l'invention.

On note que le support 3 est disposé perpendiculairement au fond 2a du chemin de câbles 2 de manière à ce que les trous oblongs 3f correspondent avec ceux 2g.

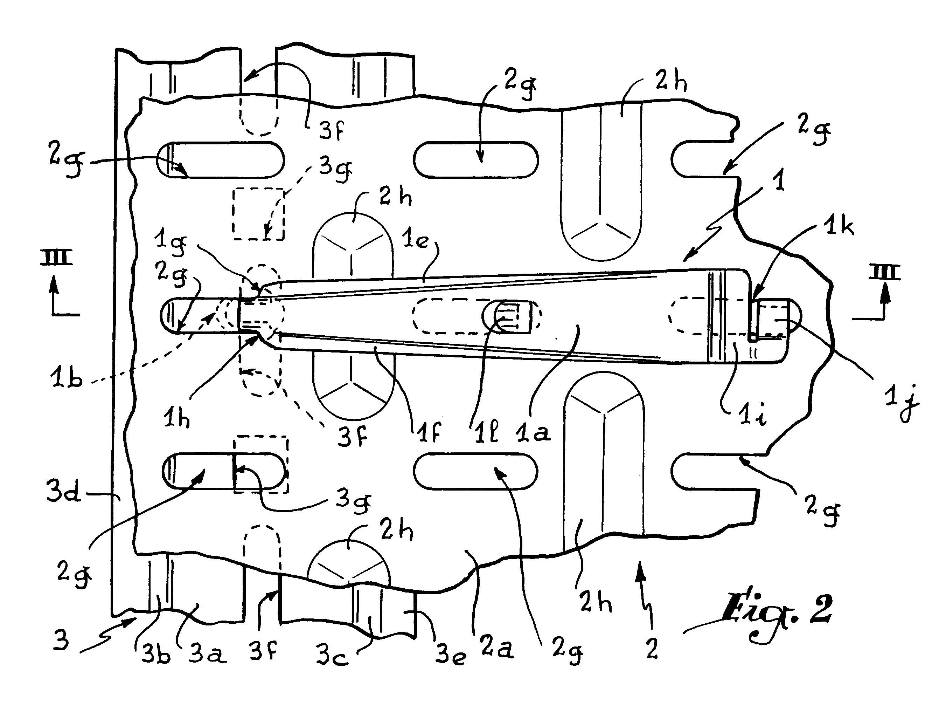

En fig. 2 à 6, on a montré la mise en place de la clé de verrouillage 1 sur le fond 2a du chemin de câbles 2 de manière à l'immobiliser sur son support 3.

On note que la distance prévue entre chaque extrémité du corps 1a et la languette 1l est équivalente à celle correspondant aux entre-axe de chaque trou oblong 2g prévu sur le fond du chemin de câbles. En effet le bec 1b, la languette ou butée de retenue 1l et la patte 1j coopèrent chacun avec un trou oblong différent 2g qui sont directement voisins les uns des autres.

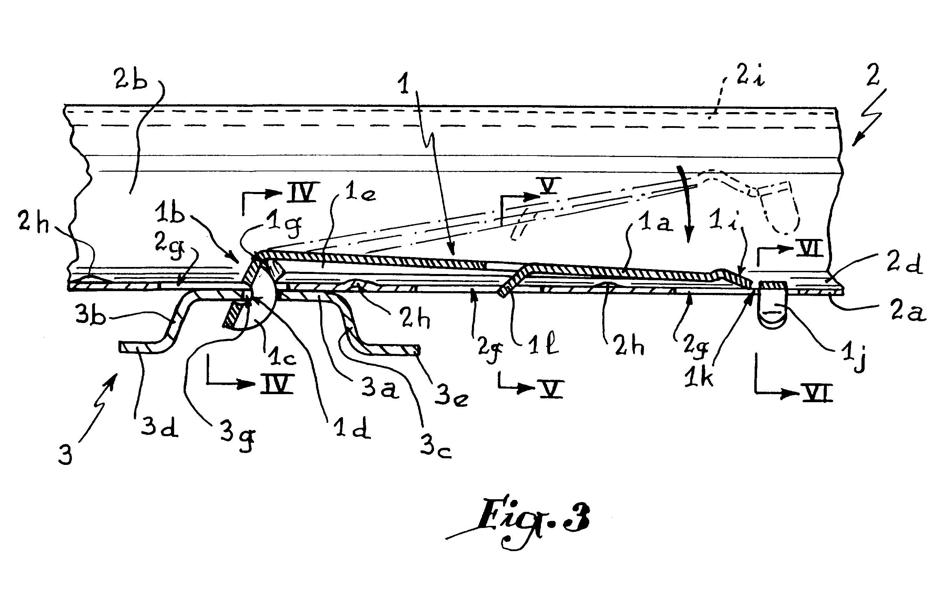

L'opérateur commence à mettre en place le chemin de câbles 2 sur son support 3 de manière que l'un des trous oblongs 2g coopèrent avec celui 3f du support 3. Ensuite, il présente une première clé 1 de manière que son extrémité comportant le bec 1b pénètre au travers des trous 2g et 3f pour que le trou 1d reçoive l'épaisseur du profilé formant le fond 3a du support 3 (fig. 3 et 4).

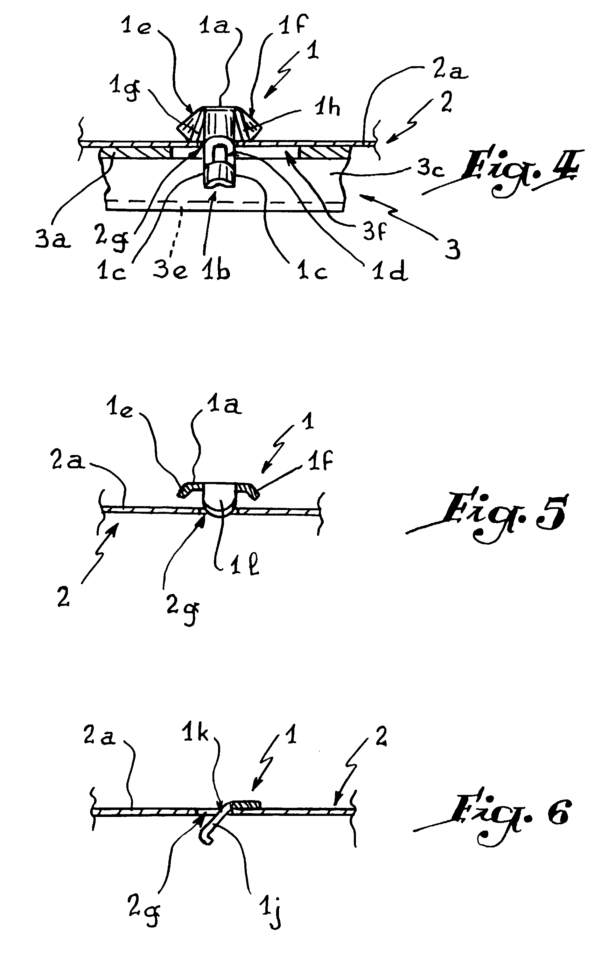

L'opérateur fait ensuite basculer la clé 1 autour du bec 1b de manière que les butées 1g et 1h viennent prendre appui sur le fond 2a, de part et d'autre du trou 2g correspondant (fig. 3, 4). Le basculement de la clé 1 permet à l'opérateur d'introduire simultanément la patte 1j et la languette ou butée de retenue 1l dans les deux autres trous 2g suivants afin de verrouiller définitivement la clé sur le fond 2a du chemin de câbles 2 (fig. 5, 6).

On constate que le verrouillage de la clé 1 est réalisé par la face 1i et la patte 1j qui viennent prendre en sandwich par l'intermédiaire de la fente 1k l'épaisseur du fond 2a au niveau de l'ouverture 2g correspondante (fig. 6).

La butée ou languette 1l coopère avec le trou 2g entre les deux premiers c'est-à-dire ceux recevant chaque extrémité de la clé 1 de manière à retenir latéralement le second moyen de fixation constitué de la face inclinée 1i de la patte 1j, et de la fente 1k et plus particulièrement du corps 1a.

On note que la distance prévue entre le profil extérieur de la came 1c et l'extrémité du bec 1b est supérieure à la largeur du trou oblong 3f afin d'éviter tout dégagement du bec 1b après basculement de la clé 1.

On constate que lors de l'introduction du bec 1b dans les ouvertures 2g du fond 2a et 3f du fond 3a du support 3, les butées 1g et 1h des pans inclinés 1e et 1f viennent en appui contre le fond 2a et de part et d'autre des ouvertures 2g pour constituer un effort de serrage en vue de bloquer le chemin de câbles sur son support 3.

On constate que la déformation élastique de la clé de verrouillage 1 empêche cette dernière de s'extraire des trous oblongs 2g sous l'action d'un câble électrique.

On note que le dispositif de fixation permet l'assemblage du chemin de câbles 2 sur leur support 3 par l'intermédiaire de la clé de verrouillage 1 et quelle que soit la configuration des trous 2g et 3f.

L'assemblage du chemin de câble 2 sur son support 3 est réalisé par l'intermédiaire de la clé de verrouillage 1 décrite précédemment.

Il est prévu une seconde clé de verrouillage 1 qui est montée soit dans le même sens, soit en sens contraire par rapport à la première pour répartir les efforts de serrage.

## Revendications

1. Dispositif de fixation du genre comprenant une clé de verrouillage déformable élastiquement pourvue à chaque extrémité d'un moyen de fixation pour l'assemblage des chemins de câbles réalisés dans une tôle perforée sur leurs supports, les moyens de fixation (1b ; 1i) permettant respectivement la retenue du chemin de câble (2) sur son support (3) et le verrouillage de la clé (1) sur le fond (2a) du chemin de câbles (2), caractérisé en ce qu'un autre moyen de fixation (1l) est prévu entre les deux premiers pour permettre le maintien latéral de la clé (1) sur le fond (2a) du chemin de câbles (2).

2. Dispositif de fixation suivant la revendication 1, caractérisé en ce que le premier moyen de fixation est constitué d'un bec (1b) présentant la forme d'une came (1c) percée en son milieu d'un trou (1d) tandis que de part et d'autre du bec (1b) sont prévues des butées (1g, 1h) qui viennent en appui contre le fond (2a) du chemin de câbles (2) et de chaque côté du trou oblong (2g) correspondant lors de la mise en place de la clé (1).

3. Dispositif de fixation suivant la revendication 1, caractérisé en ce que le second moyen de fixation est constitué d'une face inclinée (1i) découpée pour former une patte (1j) entre lesquelles est prise en sandwich l'épaisseur du fond (2a) au niveau d'un trou oblong (2g) pour verrouiller la clé (1) lors de sa mise en place.

4. Dispositif de fixation suivant la revendication 1, caractérisé en ce que le corps (1a) comprend entre le bec (1b) et la face inclinée (1j) une languette (1l) ou butée de retenue permettant le maintien latéral du corps (1a) sur le fond du chemin de câbles (2).

5. Dispositif de fixation suivant la revendication 3, caractérisé en ce que la patte (1j) est pliée dans une direction perpendiculaire à celle de la face (1j) pour constituer une fente (1k) débouchante dont l'ouverture est croissante en fonction de l'inclinaison de ladite patte.

6. Dispositif de fixation suivant la revendication 2, caractérisé en ce que les butées (1g, 1h) sont réalisées respectivement dans des pans inclinés (1e, 1f) dont la surface augmente progressivement au voisinage du bec (1b).

7. Dispositif de fixation suivant la revendication 4, caractérisé en ce que la butée (1l) coopère avec un trou oblong intermédiaire (2g) du chemin de câbles (2) par le maintien latéral de la clé (1) en position verrouillée.

8. Dispositif de fixation suivant la revendication 4, caractérisé en ce que la distance prévue entre chaque extrémité (1b, 1i) du corps (1a) et la languette (1l) ou butée de retenue est équivalente à celle correspondante aux entre-axe de chaque trou oblong (2g) du chemin de câbles (2).

9. Dispositif de fixation suivant la revendication 1, caractérisé en ce que les trous oblongs (2g) du fond (2a) sont disposés perpendiculairement à ceux (3f) du support (3) pour permettre la mise en place de la clé de verrouillage (1).

## Patentansprüche

1. Befestigungsvorrichtung mit einem elastisch verformbaren Verriegelungsschlüssel, der an jedem Ende mit einem Festlegungselement versehen ist, zum Zusammenfügen von in durchlochtem Blech hergestellten Kabelrinnen mit ihren Trägern, wobei die Festlegungselemente (1b;1i) jeweils das Halten der Kabelrinne (2) auf ihrem Träger (3) und die Verriegelung des Schlüssels (1) auf dem Boden (2a) der Kabelrinne (2) erlauben,
**dadurch gekennzeichnet,**
daß ein anderes Festlegungselement (1l) zwischen den ersten zwei vorgesehen ist, um den seitlichen Halt des Schlüssels (1) auf dem Boden (2a) der Kabelrinne (2) zu erlauben.

2. Befestigungsvorrichtung nach Anspruch 1, dadurch gekennzeichnet, daß das erste Befestigungselement durch einen Schnabel (1b) gebildet wird, der die Form eines Nockens (1c) aufweist, der in seiner Mitte durch ein Loch (1d) durchbrochen ist, während beidseitig des Schnabels (1b) Anschläge (1g,1h) vorgesehen sind, die sich gegen den Boden (2a) des Kabelkanals (2) und an jeder Seite des entsprechenden Langlochs (2g) bei der Instellungbringung des Schlüssels (1) abstützen.

3. Befestigungsvorrichtung nach Anspruch 1, dadurch gekennzeichnet, daß das zweite Festlegungselement durch eine zur Bildung einer Lasche (1j) ausgeschnittene geneigte Fläche (1i) gebildet ist, zwischen denen sandwichartig die Dicke des Bodens (2a) an dem Langloch (2g) aufgenommen ist, um den Schlüssel (1) bei seiner Instellungbringung zu verriegeln.

4. Befestigungsvorrichtung nach Anspruch 1, dadurch gekennzeichnet, daß der Körper (1a) zwischen dem Schnabel (1b) und der geneigten Fläche (1i) eine Zunge (1l) oder Halteanschlag umfaßt, der den seitlichen Halt des Körpers (1a) auf den Boden der Kabelrinne (2) erlaubt.

5. Befestigungsvorrichtung nach Anspruch 3, dadurch gekennzeichnet, daß die Lasche (1j) in eine Richtung senkrecht zu der der Fläche (1i) gefaltet ist, um einen offenen Spalt (1k) zu bilden, dessen Öffnung in Abhängigkeit von der Neigung der Lasche zunehmend ist.

6. Befestigungsvorrichtung nach Anspruch 2, dadurch gekennzeichnet, daß die Anschläge (1g,1h) jeweils in geneigten Wänden (1e,1f) ausgebildet ist, deren Fläche sich fortschreitend in der Nähe des Schnabels (1b) erhöht.

7. Befestigungsvorrichtung nach Anspruch 4, dadurch gekennzeichnet, daß der Anschlag (1l) mit einem Zwischenlangloch (2g) der Kabelrinne (2) durch den seitlichen Halt des Schlüssels in verriegelter Stellung zusammenarbeitet.

8. Befestigungsvorrichtung nach Anspruch 4, dadurch gekennzeichnet, daß der zwischen jedem Ende (1b,1i) des Körpers (1a) und der Zunge (1l) oder Halteanschlag vorgesehene Abstand äquivalent zu dem dem Achsabstand jedes Langlochs (2g) der Kabelrinne (2) entsprechenden ist.

9. Befestigungsvorrichtung nach Anspruch 1, dadurch gekennzeichnet, daß die Langlöcher (2g) des Bodens (2a) senkrecht zu denen (3f) des Trägers (3) angeordnet sind, um die Instellungbringung des Verriegelungsschlüssels (1) zu ermöglichen.

## Claims

1. Fixing device of the type comprising a locking key which is elastically deformable and is provided at each end with a fixing means for the assembly of cable conduits made from a perforated metal sheet on their supports, the fixing means (1b; 1i) respectively allowing the holding of the cable conduit (2) on its support (3) and the locking of the key (1) on the base (2a) of the cable conduit (2), characterised in that another fixing means (1l) is provided between the first two in order to allow the lateral maintenance of the key (1) on the base (2a) of the cable conduit (2).

2. Fixing device according to claim 1, characterised in that the first fixing means is constituted by a beak (1b) presenting the form of a cam (1c) pierced at its middle with a hole (1d) whereas both sides of the beak (1b) are provided with abutments (1g,1h) which come to rest against the base (2a) of the cable conduit (2) and each side of the corresponding oblong hole (2g) when the key is in place.

3. Fixing device according to claim 1, characterised in that the second fixing means is constituted by an inclined face (1i) cut in order to form a foot (1j) between which is sandwiched the thickness of the base (2a) at the level of an oblong hole (2g) to lock the key when it is in place.

4. Fixing device according to claim 1, characterised in that the body (1a) comprises between the beak and the inclined face (1i) a tongue (1l) or retaining abutment permitting the lateral maintenance of the body (1a) on the base of the cable conduit (2).

5. Fixing device according to claim 3, characterised in that the foot (1j) is folded in a direction perpendicular to that of the face (1i) in order to constitute an open cleft (1k) of which the opening increases as a function of the inclination of the said foot.

6. Fixing device according to claim 2, characterised in that the abutments (1g, 1h) are respectively realised as inclined sides of which the surface increases progressively in the neighbourhood of the beak.

7. Fixing device according to claim 4, characterised in that the abutment (1l) co-operates with an oblong hole (2g) intermediate the cable conduit (2) for the lateral maintenance of the key (1) in a locked position.

8. Fixing device according to claim 4, characterised in that the distance provided between each end (1b,1i) of the body (1a) and the tongue (1l) or abutment is equivalent to the pitch of the oblong holes (2g) of the cable conduit (2).

9. Fixing device according to claim 1, characterised in that the oblong holes (2g) in the base (2a) are disposed perpendicular to those (3f) in the support (3) in order to allow the positioning of the locking key (1).
